Europäisches Patentamt

(19) European Patent Office

Office européen des brevets

(11) Veröffentlichungsnummer: **0 073 914**
**B1**

# (12) EUROPÄISCHE PATENTSCHRIFT

(45) Veröffentlichungstag der Patentschrift:
03.10.84

(21) Anmeldenummer: 82106533.1

(22) Anmeldetag: 20.07.82

(51) Int. Cl.³: **A 41 H 43/00,** B 29 C 24/00

(54) **Verfahren und Vorrichtung zum Fertigen von Aufhängeschlaufen für Bekleidungsstücke o.dgl.**

(30) Priorität: **20.08.81 DE 3132862**

(43) Veröffentlichungstag der Anmeldung:
**16.03.83 Patentblatt 83/11**

(45) Bekanntmachung des Hinweises auf die Patenterteilung:
**03.10.84 Patentblatt 84/40**

(84) Benannte Vertragsstaaten:
**BE CH DE FR GB LI LU NL SE**

(56) Entgegenhaltungen:
**GB - A - 815 292**
**US - A - 3 338 771**
**US - A - 3 777 683**
**US - A - 4 119 448**

(73) Patentinhaber: **Otto Brand GmbH, Bleicherstrasse 5-7, D-5600 Wuppertal 2 (DE)**

(72) Erfinder: **Zimmermann, Hubert, Josefstrasse 93, D-5100 Aachen (DE)**
Erfinder: **Kempf, Thomas, Bleicherstrasse 5-7, D-5600 Wuppertal 2 (DE)**

(74) Vertreter: **Dipl.-Ing. H. Marsch Dipl.-Ing. K. Sparing Dipl.-Phys.Dr. W.H. Röhl Patentanwälte, Rethelstrasse 123, D-4000 Düsseldorf (DE)**

## Beschreibung

Die Erfindung betrifft ein Verfahren und eine Vorrichtung zum Fertigen von Aufhängeschlaufen für Bekleidungsstücke od. dgl. nach den Oberbegriffen der Ansprüche 1 bzw. 2.

Aufhängeschlaufen, wie sie beispielsweise in Röcke eingenäht werden, werden zunächst als bandförmiges textiles Schlaufenmaterial hergestellt und in Rollenform aufgewickelt. Bisher wurden diese Aufhängeschlaufen bei der Konfektion des entsprechenden Kleidungsstücks derart hergestellt, dass eine der Aufhängeschlaufe entsprechende Länge von dem Rollenmaterial abgetrennt und manuell zu einer Schlaufe zusammengelegt wurde, die dann eingenäht wurde. Dies ist aber zeitraubend und aufwendig.

Aufgabe der Erfindung ist es daher, ein Verfahren und eine Vorrichtung nach den Oberbegriffen der Ansprüche 1 bzw. 2 zu schaffen, die in einfacher Weise ein Vorfertigen der Aufhängeschlaufen ermöglichen, so dass diese ohne zeitraubende manuelle Handhabungen ergriffen und eingenäht werden können.

Diese Aufgabe wird entsprechend den kennzeichnenden Teilen der Ansprüche 1 bzw. 2 gelöst.

Weitere Ausgestaltungen der Erfindung sind der nachfolgenden Beschreibung und den Unteransprüchen zu entnehmen.

Die Erfindung wird nachstehend anhand des in den beigefügten Abbildungen dargestellten Ausführungsbeispiels näher erläutert.

Fig. 1 zeigt schematisch eine Maschine zum Fertigen von Aufhängeschlaufen.

Fig. 2 zeigt eine Teilansicht der Maschine von Fig. 1 mit einer Abtrenn- und Schlaufenbildungsstation.

Fig. 3 zeigt eine Ansicht längs der Linie III-III von Fig. 2.

Fig. 4 zeigt eine Draufsicht auf ein Bandmaterial für die Schlaufenherstellung.

Fig. 5 zeigt perspektivisch eine fertige Schlaufe.

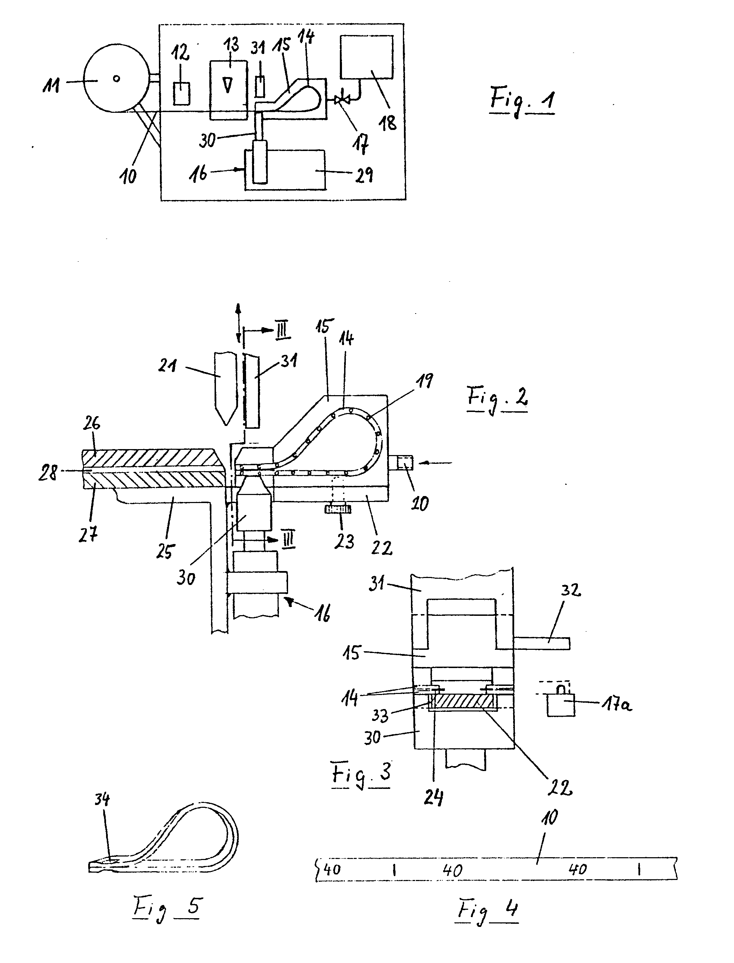

Bei der in Fig. 1 dargestellten Maschine zum Fertigen von Aufhängeschlaufen wird Schlaufenbandmaterial 10 von einer Rolle 11 abgewickelt und einer taktweise arbeitenden Förderstrecke zugeführt, wobei das Abwickeln im Maschinentakt erfolgt und mittels Mikroschaltern (nicht dargestellt) über eine eingestellte Bandmaterialvorlauflänge gesteuert wird. Das Schlaufenbandmaterial 10, das längs der Förderstrecke gefördert wird, kann zunächst unter einer fotoelektrischen Abtasteinrichtung 12 hindurchlaufen, die auf einen bestimmten Punkt des vorbeilaufenden Schlaufenbandmaterials 10 eingestellt ist, wenn letzteres mit entsprechenden Markierungen, etwa entsprechend Fig. 4, versehen ist. Die Abtasteinrichtung 12 steuert dann eine nachfolgende Abtrenneinrichtung 13 mit einem (beispielsweise beheizten) Messer, so dass die den Aufhängeschlaufen entsprechenden Längen gemäss dem Rapport an der gewünschten Stelle von dem Schlaufenbandmaterial 10 in der Abtrenneinrichtung 13 abgeschnitten werden. Bei fehlenden Markierungen auf dem Schlaufenbandmaterial 10 kann der taktweise Vorschub beispielsweise auch mechanisch gesteuert sein. Das Schlaufenbandmaterial 10 wird vor dem Abtrennen in einen schlaufenförmig gestalteten Führungskanal 14 eines Führungsstücks 15 eingeschossen, so dass die beiden miteinander zu verbindenden Enden der Aufhängeschlaufe benachbart zueinander und übereinander angeordnet werden. Diese beiden Enden werden dann durch eine Ultraschall-Schweisseinrichtung 16 während des Abtrennens der so gebildeten Aufhängeschlaufe von dem Schlaufenbandmaterial 10 miteinander verschweisst, und anschliessend wird die fertige Aufhängeschlaufe aus der Nut des Führungskanals ausgeworfen.

Bei dem dargestellten Ausführungsbeispiel erfolgt das Auswerfen der fertigen Aufhängeschlaufe mittels Druckluft. Zu diesem Zweck ist das Führungsstück 15 im Inneren mit einem Hohlraum versehen, der über ein Ventil 17 mit einer Druckluftquelle 18 verbunden ist. In der Rückwand des Führungskanals 14 münden Luftaustrittsöffnungen 19, die mit dem Hohlraum im Inneren des Führungsstücks 15 verbunden sind. Ein Druckluftanschlussstutzen 20 zum Anschliessen der Druckluftquelle 18 an den Hohlraum des Führungsstücks 15 ist in Fig. 2 dargestellt. Das Ventil 17 wird beispielsweise durch einen Mikroschalter 17a (Fig. 3) etwa in dem Moment geöffnet, wenn das Messer 21 der Abtrenneinrichtung 13 seine Abtrennposition erreicht hat, und nach Verlassen dieser Position wieder geschlossen, so dass auf die in dem Führungskanal 14 befindliche Aufhängeschlaufe über die Luftaustrittsöffnungen 19 eine entsprechende Anzahl Luftstösse, im Moment des Abtrennens von dem Schlaufenbandmaterial 10, einwirken, die die fertige abgetrennte Aufhängeschlaufe auswerfen. Die Breite des Führungskanals 14 ist derart zu wählen, dass sie im wesentlichen der Stärke des Schlaufenbandmaterials 10 entspricht, so dass die Luftstösse optimal zur Wirkung kommen.

Anstelle des beschriebenen Auswerfens mittels Druckluft kann jedoch auch eine mechanische etwa mittels Stössel arbeitende Auswerfeinrichtung verwendet werden.

Gemäss Fig. 2 ist das Führungsstück 15 auf einer Trägerplatte 22 mittels einer Rändelschraube 23 befestigt und kann daher leicht ausgewechselt werden, falls ein anderes Schlaufenbandmaterial 10 verwendet oder eine andere Schlaufengrösse hergestellt werden soll. Um die beiden miteinander zu verbindenden Schlaufenenden möglichst nahe beieinander anzuordnen, wird es bevorzugt, wenn im Eintrittsbereich des Schlaufenbandmaterials 10 die beiden übereinander befindlichen Endbereiche des Führungskanals 14 durch einen dünnen Federstahleinsatz 24 voneinander getrennt sind.

Der Eintrittsbereich des Führungskanals 14 befindet sich in einem geringen Abstand von der Förderstrecke für das Schlaufenbandmaterial, die benachbart zum Führungsstück 15 aus zwei auf einem Maschinenrahmen 25 montierten, übereinander angeordneten Führungsplatten 26, 27 besteht, zwischen denen eine Nut 28 angeordnet ist, durch die das Schlaufenbandmaterial 10 beispielsweise durch (nicht dargestellte) Reibräder gefördert wird. Die obere Führungsplatte 26 ist an der dem Führungsstück 15 zugewandten Seite entsprechend der Form des Messers 21 abgeschrägt.

Das Führungsstück 15 ist im Eintrittsbereich für das Schlaufenbandmaterial 10 in seiner Breite vermindert, so dass der Führungskanal 14 im Eintrittsbereich eine Tiefe höchstens etwa gleich der Hälfte der Breite des Schlaufenbandmaterials 10 aufweist. Die durch das Führungsstück 15 gebildete Schlaufe wird dann in dem seitlich aus dem Führungskanal 14 herausragenden Bereich durch die Ultraschall-Schweisseinrichtung 16 verschweisst, die aus einem Ultraschallgenerator 29, einer Sonotrode 30, die an dem Maschinenrahmen 25 befestigt ist, und einem Amboss 31 besteht, der bezüglich der Sonotrode 30 auf- und abbeweglich angeordnet ist. Vorzugsweise ist der Amboss 31 mit dem Messer 21 verbunden und mit diesem auf- und abbeweglich. Wenn sich das Messer 21 in seiner Abtrennstellung befindet, wird hierdurch gleichzeitig der Amboss 31 gegen die Gegenfläche der Sonotrode 30 gedrückt, so dass die dazwischen befindlichen Schlaufenenden miteinander verschweisst werden. Hierbei kann der Ultraschallgenerator 29 entweder kontinuierlich oder taktweise arbeiten. Zur Auslösung des Mikroschalters 17a kann der Amboss 31 oder das Messer 21 mit einem Arm 32 versehen sein.

Bei der dargestellten Ausführungsform ist das Führungsstück 15 auf beiden Seiten jeweils mit einem Führungskanal 14 versehen, so dass gleichzeitig zwei Aufhängeschlaufen hergestellt werden können. Dementsprechend ist dann die Förderstrecke zweispurig auszubilden und die Sonotrode 30 und der Amboss 31 umfassen dann das Führungsstück 15 im Eintrittsbereich im Schweisszustand auf beiden Seiten, wobei natürlich ein Luftspalt 33 zwischen der Sonotrode 30 und dem Amboss 31 einerseits und dem Führungstück 15 andererseits existieren muss, damit der Schweissvorgang erfolgen kann.

In Fig. 5 ist eine mit der beschriebenen Maschine hergestellte Aufhängeschlaufe dargestellt, die mit einer Ultraschallverschweissung 34 versehen ist, die sich von einem Rand der Schlaufe bis etwa zur Mitte ihrer Breite erstreckt.

**Patentansprüche**

1. Verfahren zum Fertigen von Aufhängeschlaufen für Bekleidungsstücke od. dgl. aus bandförmigem textilem Schlaufenmaterial, das in den Aufhängeschlaufen entsprechende Längen zerschnitten wird, dadurch gekennzeichnet, dass das Schlaufenmaterial (10) aufeinanderfolgend mittels eines Führungsstücks (15) in Schlaufenform gebracht wird, wobei die Enden der Schlaufe einander gegenüberliegend aus dem Führungsstück (15) herausragen, die herausragenden Enden miteinander ultraschallverschweisst werden und die Schlaufe abgetrennt und ausgeworfen wird.

2. Maschine zum Fertigen von Aufhängeschlaufen für Bekleidungsstücke od. dgl. aus bandförmigem textilem Schlaufenmaterial mit einer taktweise arbeitenden Förderstrecke und einer Abtrenneinrichtung, zur Durchführung des Verfahrens nach Anspruch 1, dadurch gekennzeichnet, dass nach der Abtrenneinrichtung (13) ein Führungsstück (15) mit einem schlaufenförmigen, in Förderrichtung offenen Führungskanal (14) vorgesehen ist, wobei im Eintrittsbereich des Führungskanals (14) eine Sonotrode (30) einer Ultraschall-Schweisseinrichtung (16) und ein hierzu hin- und herbeweglicher Amboss (31) im Weg des Schlaufenmaterials (10) angeordnet sind, während das Führungsstück (15) mit einer Auswerfeinrichtung (19) versehen ist.

3. Maschine nach Anspruch 2, dadurch gekennzeichnet, dass das Führungsstück (15) einen Führungskanal (14) aufweist, dessen Breite im wesentlichen der Stärke des Schlaufenmaterials (10) entspricht, wobei Luftaustrittsöffnungen (19) am Boden des Führungskanals (14) vorgesehen sind, die mit einem Hohlraum im Inneren des Führungsstücks (15), das mit einer Druckluftquelle (18) über ein Ventil (17) verbunden ist, in Verbindung stehen, wobei das Ventil (17) bei jedem Schweissvorgang betätigbar ist.

4. Maschine nach einem der beiden Ansprüche 2 oder 3, dadurch gekennzeichnet, dass der Führungskanal (14) im Eintrittsbereich des Schlaufenmaterials (10) eine Tiefe höchstens etwa gleich der Hälfte der Breite des Schlaufenmaterials (10) aufweist und die Schweissflächen der Sonotrode (30) und des Amboss (31) in diesem Bereich miteinander unter Einklemmen des Schlaufenmaterials (10) in Eingriff bringbar sind.

5. Maschine nach einem der Ansprüche 2 bis 4, dadurch gekennzeichnet, dass zwei parallele Förderstrecken und beidseitig des Führungsstücks (15) jeweils ein Führungskanal (14) vorgesehen sind.

6. Maschine nach Anspruch 5, dadurch gekennzeichnet, dass die Sonotrode (30) und der Amboss (31) im Schweisszustand das Führungsstück (15) im Eintrittsbereich des Schlaufenmaterials (10) unter Belassung eines Luftspaltes (33) zum Führungsstück (15) umfassen.

7. Maschine nach einem der Ansprüche 2 bis 6, dadurch gekennzeichnet, dass der Amboss (31) mit einem Messer (21) der Abtrenneinrichtung (13) auf- und abbeweglich ist.

8. Maschine nach einem der Ansprüche 2 bis 7, dadurch gekennzeichnet, dass die beiden Endbereiche des Führungskanals (14) im Eintrittsbereich des Schlaufenmaterials (10) durch einen dünnen Federstahleinsatz (24) voneinander getrennt sind.

**Claims**

1. Method of manufacturing hanger loops for garments or the like from strip textile loop material which is cut into lengths corresponding to the hanger loops, characterized in that the loop material (10) is given sequentially a loop shape by means of a guiding piece (15), the ends of the loop protruding opposite each other out of the guiding piece (15), the protruding ends being welded together by an ultrasonic process, and the loop being separated and ejected.

2. Machine for manufacturing hanger loops for garments or the like from strip textile loop material with an oscillating conveyor band operating as a separation device for carrying out the method according to Claim 1, characterized in that a guiding piece (15) is provided after the separation device (13) with a loop-shaped guiding channel (14) open in the conveying direction, a sonotrode (30) of an ultrasonic welding device (16) and an anvil (31) movable to and fro in the path of the loop material (10) are disposed in the inlet area of the guiding channel (14), while the guiding piece (15) is provided with an ejection device (19).

3. Machine according to Claim 2, characterized in that the guiding piece (15) has a guiding channel (14), the width of which corresponds substantially to the thickness of the loop material (10), air outlet openings (19) being provided on the bottom of the guiding channel (14), said openings being connected with a cavity inside the guiding piece (15) which is itself connected with a source of compressed air (18) *via* a valve (17), the valve (17) being actuatable on each welding process.

4. Machine according to one of Claims 2 or 3, characterized in that the guiding channel (14) has in the inlet area of the loop material (10) a depth which is at most substantially equivalent to half the width of the loop material, and in that the welding surfaces of the sonotrode (30) and of the anvil (31) in this area can be brought into mutual engagement with the clamping of the loop material (10).

5. Machine according to one of Claims 2 to 4, characterized in that two parallel conveyer bands, and a guiding channel (14) on both sides of the guiding piece (15), are provided.

6. Machine according to Claim 5, characterized in that the sonotrode (30) and the anvil (31) in the welding condition surround the guiding piece (15) in the inlet area of the loop material (10) leaving an air gap (33) to the guiding piece (15).

7. Machine according to one of Claims 2 to 6, characterized in that the anvil (31) can be moved up and down with a blade (21) of the separation device (13).

8. Machine according to one of Claims 2 to 7, characterized in that the two end areas of the guiding channel (14) are separated in the inlet area of the loop material (10) by a thin spring-steel insert (24).


**Revendications**

1. Procédé pour la réalisation de boucles de suspension pour vêtements ou autres, la matière pour boucles étant en ruban textile et coupée dans des longueurs correspondant aux boucles de suspension, caractérisé en ce qu'on met les matières pour boucle (10) sous forme de boucles à la suite les unes des autres au moyen d'une pièce de guidage (15), les extrémités de la boucle dépassant en vis-à-vis de la pièce de guidage (15), on soude aux ultra-sons les extrémités qui dépassent, puis on sépare et évacue la boucle.

2. Machine pour la réalisation de boucles de suspension pour vêtements ou autres, la matière pour boucles étant en ruban textile, avec une voie transporteuse fonctionnant par cadences et un dispositif de séparation, pour la mise en œuvre du procédé selon la revendication 1, caractérisée en ce qu'elle comprend, après le dispositif de séparation (13), une pièce de guidage (15) munie d'un canal de guidage (14) en forme de boucle, ouvert dans la direction d'alimentation, une sonotrode (30) d'une installation de soudage à ultra-sons (16) et, en va-et-vient par rapport à elle, une enclume (31) sur le trajet de la matière pour boucles (10), disposées dans la zone d'entrée du canal de guidage (14), tandis que la pièce de guidage (15) est munie d'un dispositif d'éjection (19).

3. Machine selon la revendication 2, caractérisée en ce que la pièce de guidage (15) présente un canal de guidage (14) dont la largeur correspond pour l'essentiel à l'épaisseur de la matière pour boucles (10), tandis que des orifices de sortie d'air (19) sont prévus sur le fond du canal de guidage (14), ces orifices communiquant avec un espace creux situé à l'intérieur de la pièce de guidage (15), qui est relié à une source d'air comprimé (18) par une vanne (17), la vanne (17) étant agencée pour être actionnée par chaque processus de soudage.

4. Machine selon l'une des revendications 2 ou 3, caractérisée en ce que le canal de guidage (14) présente, dans la zone d'entrée de la matière pour boucles (10), une profondeur n'excédant pas environ la moitié de la largeur de la matière pour boucles (10), et en ce que les surfaces de soudage de la sonotrode (30) et de l'enclume (31) peuvent être mises en action conjointement dans cette zone avec pincement de la matière pour boucles (10).

5. Machine selon l'une des revendications 2 à 4, caractérisée en ce qu'elle est pourvue de deux voies transporteuses parallèles et, sur chacun des deux côtés de la pièce de guidage (15), d'un canal de guidage (14).

6. Machine selon la revendication 5, caractérisée en ce que la sonotrode (30) et l'enclume (31) s'étendent, pour la position de soudage de la pièce de guidage (15), dans la zone d'entrée de la matière pour boucles (10), tout en laissant une fente d'aération vers la pièce de guidage (15).

7. Machine selon l'une des revendications 2 à 6, caractérisée en ce que l'enclume (31) peut être montée et descendue avec un couteau (21) du dispositif de séparation (13).

8. Machine selon l'une des revendications 2 à 7, caractérisée en ce que les deux zones terminales du canal de guidage (14) sont séparées l'une de l'autre, dans le secteur d'admission de la matière pour boucles (10), par un élément mince en acier à ressort (24).

Fig. 1

Fig. 2

Fig. 3

Fig 5

Fig 4